# EUROPEAN PATENT SPECIFICATION

(11) **EP 3 117 955 B1**
(45) Date of publication and mention of the grant of the patent: **13.09.2017**
(21) Application number: 15176662.3
(22) Date of filing: 14.07.2015
(51) Int. Cl.: B23Q 7/14

(54) **MACHINE TOOL WITH A PALLET CHANGER AND PALLET CHANGER**
WERKZEUGMASCHINE MIT EINEM PALETTENWECHSLER UND PALETTENWECHSLER
MACHINE OUTIL AVEC CHANGEUR DE PALETTE ET CHANGEUR DE PALETTE

(43) Date of publication of application: 18.01.2017
(73) Proprietor: Agie Charmilles New Technologies SA, 1217 Meyrin 1 (CH)
(72) Inventor: Paganelli, Dino Cataldo, 73610 St. Alban de Montbel (FR)
(74) Representative: Fenner, Seraina

(56) References cited:
- DE-A1- 2 840 758
- DE-A1- 19 736 252
- JP-A- S63 109 923
- JP-A- 2001 150 275

## Description

The present invention relates to a pallet changer according to claim 13 and to a machine tool with integrated pallet changer according to claim 1.
Pallet changers for machine tools are generally known and used in the field of workpiece machining like milling, turning, engraving or electrical discharge machining (EDM). Pallet changers are intended to improve the efficiency respectively the productivity of a machine tool by automatically or semi automatically providing a machine tool with pallets containing one or more raw part respectively workpieces intended to be machined. The pallet changer has hereby to exchange respectively extract a pallet, containing a machined workpiece, from the working area of a machine tool and subsequently to provide the machine tool with another pallet, containing a raw part to be machined.
The document EP 743 138 A2 discloses a pallet changer according to the state of the art. That publication shows a pallet changer which consists of a so called injection chamber containing a multiplicity of piled pallets, each containing a plurality of raw parts, a working chamber for machining the raw parts and a discharge chamber containing pallets with machined workpieces. According to that publication, a robot moves the raw parts one at a time into the working chamber and delivers also the machined workpiece back into the same pallet. Once all raw parts of a pallet are machined, the pallet is shifted into the upper part of a discharge chamber and piled on the top of other pallets, which contain machined workpieces.
A further pallet changer is disclosed in the Japanese document JP 4-322940 published in 1992. Here the pallets can be loaded from the outside of the machine on a setup station. The pallet changer includes conveyors which can move a pallet from the setup station to a kind of pallet elevator. Said pallet elevator moves the pallet into a rack which contains several vertically allocated pallets. Further, said kind of pallet elevator can remove and convey a pallet from the rack to the working area of the machine tool.

The document JP 2001-150275 A on the other hand discloses a pallet exchange device associated to a machining tool for the exchange of a plurality of pallets arranged vertically above each other on several tables into a rack. Every table contains two pallets. Each pallet is used for storing a plurality of tools. The pallets respectively tables are vertically moveable. At a predetermined height position, the pallets allocated on the table at that height can be transferred into the machine tool and also extracted from the inside of the machine tool back to the rack on the table from which the pallets were removed.

The document DE 197 36 252 A1 discloses a pallet changer for machine tools wherein said pallet changer includes a vertical axle, which supports two revolvable, symmetrically arranged pallets. The pallets are separated from each other by a wall.

The object of the present invention is to provide a pallet changer with improved characteristics.

The object of the invention is achieved with a pallet changer designed in accordance with the features of claim 1.

Thanks to the inventive pallet changer, it is possible to load and unload pallets more efficiently in and out of the pallet changer respectively in and out of the machine tool. The exchange of pallets at the setup station can occur in a more flexible way - for example within a protracted time limit - and particularly without affecting the exchange process of pallets in and out of the machine tool itself. In addition, the inventive device allows very fast pallet exchanges (e.g. about 6 sec.) compared to known systems. That characteristic shortens the machining time additionally.
These advantages are due particularly to the inventive characteristic of having two racks supported and revolving - simultaneously - around one supporting axle, but being designed to move independently from each other in vertical direction along the supporting axle and by having two independently functioning pallet extractors, one for each rack. One pallet extractor is oriented for moving respectively shifting a pallet between the rack and the working area of the machine tool, while the other pallet extractor is oriented for moving respectively shifting a pallet between the setup station of the rack facing the working area into (or next to) that working area. Part of the inventive idea is the concept of having two revolving racks to allow the independent exchange of pallets. That means the pallets of the rack facing the setup station can be exchanged via the setup station, while the other rack - facing the working area of the machine tool - is enabled at the same time to independently exchange pallets with the working area. By this concept the efficiency in pallet exchange is significantly improved: The operator at the setup station can exchange respectively replace the pallets containing machined workpieces with pallets containing new raw parts intended to be machined in a timely flexible manner from one rack, while in the other rack - at the same time and independently from the first rack - pallets are exchanged with the working area of the machine tool whenever needed. Once all pallets of one or of both racks have been processed, the racks are revolved (synchronously) around their vertical rotational axle. By that, the exchange of pallets with the working area and the exchange of pallets with the setup station can be performed independently from each other.
For the rack facing the working area of the machine tool, the pallet containing one or more machined workpieces will be extracted from the working area once their machining process is accomplished, deposited in the associated tray of that rack, and - after an occurred vertical movement of that rack - will be replaced with another pallet containing a new raw part to be processed. The new pallet is preferably horizontally moved into the working area. The invention foresees the employment of two independently functioning pallets extractors for conducting the described pallet movements.
The pallet extractors can either be fixedly associated with one rack, revolving consequently with that rack every time the racks are turned around the vertical axle, or the pallet extractors remain fixedly orientated towards the setup station respectively towards the working area. In this second arrangement, the pallet extractors do consequently not rotate but maintain their orientation.
In a possible embodiment of the invention it is also thinkable to have just one pallet extractor for both racks. Such a configuration offers the advantage to save some costs. On the other hand, just one pallet at the time can be moved. This disadvantage can be mitigated to a certain extend by giving priority to pallet exchanges in the working area.

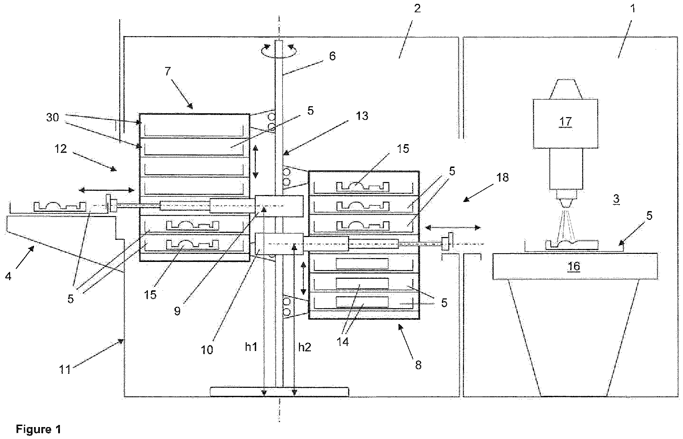

The invention and its technical effects will now be explained with reference to the schematic figure 1.

Figure 1 illustrates schematically a possible embodiment of a machine tool with integrated pallet changer according to the invention.

The figure 1 shows schematically a pallet changer 2 which is associated to a machine tool 1. The machine tool 1 includes a machining head 17 and a machine table 16, both allocated in the working area 3. On that machine table 16 a pallet 5 is positioned, containing one or more workpieces intended to be machined by the machining head 17. The invention is not restricted in its application to a specific machining process. The machining head 17 can machine a workpiece consequently by different machining processes, for instance by a milling, by a turning lathe process, by engraving, by an electroerosion process (EDM) or by a laser machining process etc. Preferably and as illustrated in the figure 1 schematically, the machine tool 1 machines workpieces by a laser ablation process. The pallets 5 located in the working area 3 and containing the raw parts 14 respectively the machined workpieces 15 are exchanged with the inventive pallet changer 2. For the correct positioning of the pallets 5 provided by the pallet changer 2 on the machine table 16 of the machine tool 1, the machine tool 1 might include an own moving apparatus (e.g. a robot arm) or preferably use - as illustrated in the figure - the pallet extractor 10 of the inventive pallet changer 2. The combined use of a moving apparatus in the machine tool and a pallet extractor in the pallet changer is also thinkable.

The pallet changer 2 includes according to the present invention a vertical rotational axle 6, which supports two - around that rotational axle 6 - synchronously revolvable, preferably symmetrically arranged, racks 7 and 8. The racks 7 and 8 are also movably supported along the axle 6 independently from each other to allow independent movements in vertical direction (see double arrows in the figure 1). Every rack contains several - at least two - trays. Each tray is intended to contain one pallet 5 (although it is also imaginable according to the invention that every tray contains more than one pallet). The pallets 5 can be shifted in and out of those trays. To shift the pallets in and out of those trays, the pallet changer 2 further comprises two pallet extractors 9 and 10. Both pallet extractors 9 or 10 are designed to (horizontally) shift a pallet 5 located in a tray at a predetermined height h1 respectively h2 into or outside of the racks 7 respectively 8. In the displayed configuration both pallet extractors a fixedly installed/oriented, meaning they do not rotate together with the racks. While the first pallet extractor 9 is designed to shift the pallet 5 located at that predetermined height h1 between the rack 7 and the setup station 4, the second pallet extractor 10 is designed to move the pallet 5 located at the predetermined height h2 between the rack 8 and the working area 3 of the machine tool 1. The pallet extractors have a gripper for pushing or pulling the pallets.
The racks 7 and 8 supported by the vertical rotational axle 6 are preferably separated from each other by a wall 13. In the displayed embodiment, the pallet extractors are not associated to the racks. The pallet extractors 9 and 10 do not turn, but keep their position and orientation once the racks 7 and 8 rotate synchronously together with the wall 13 around the vertical axle 6. For that purpose, the wall 13 might have an opening (not shown in the figure) to allow its rotation despite the fixed remaining orientation of the pallet extractors 9 and 10. The pallet extractors 9 and 10 can both be designed as telescopic arms, which can expand and collapse together. The pallet extractors illustrated in figure 1 are designed to collapse to the extent that they do not hinder the rotational movement of the racks or other parts once such a turn occurs. The pallet extractors are preferably allocated apart of the illustrated rack bearings or of the axle 6 for not hindering the vertical movement of the rack.
The pallets 5 contain initially raw parts 14 (workpieces to be machined) and - after the occurred machining process - machined workpieces 15. Since both racks 7 and 8 can be moved independently from each other in vertical direction (see double arrows) and both pallet extractors 9 and 10 are also operating independently, the content of each rack can be processed independently: While the pallet extractor 10 provides for the machining of the content of each pallet 5 contained in the rack 8 (rack orientated towards the machining tool 1), the rack 7 (rack oriented towards the setup station 4) is emptied by the support of the pallet extractor 9. That pallet extractor 9 moves - pallet by pallet - every pallet 5 out of the trays of the rack 7 by shifting those pallets onto the setup station 4 where the machined workpieces 15 are manually or automatically removed. The emptied pallets could for instance be pulled back into the respective trays (as illustrated in figure 1). By this, a rack can be emptied and maybe later refilled with raw parts in due time, while the other rack respectively its content is continuously processed by the machine tool 1. By the inventive device, the efficiency of the machine tool 1 is improved. The wall 13 performs also the function to separate physically both racks. By that, the content of the trays from the rack facing the setup station 4 can be replaced without any need to stop for security reasons the machining process in the working area 3 of the machine tool 1.

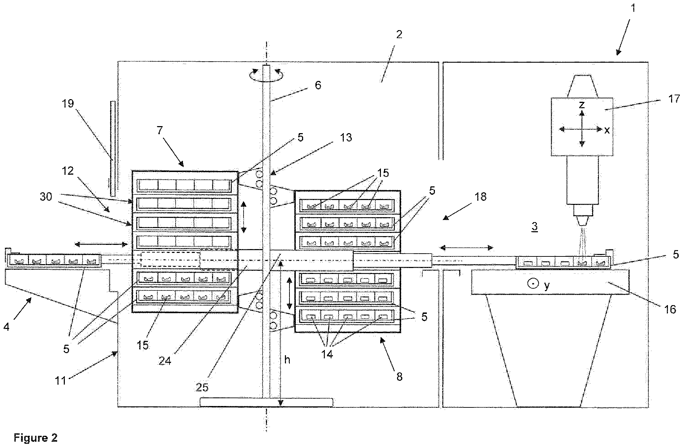

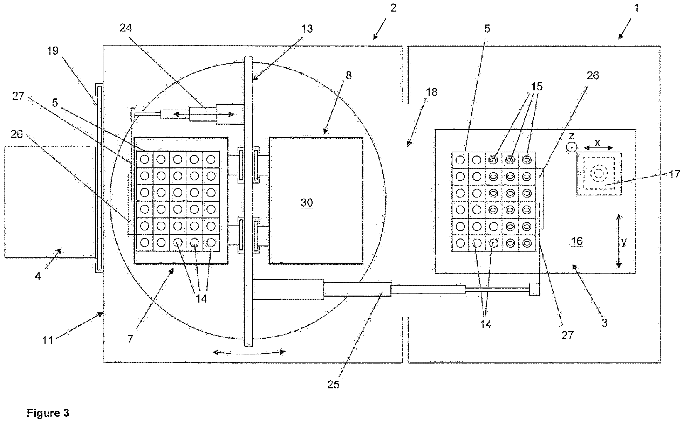

The schematic figures 2 and figure 3 illustrate a further preferred embodiment of the invention in side view and top view. In this embodiment the pallet extractors 24 and 25 are fixedly associated to the respective rack and permanently mounted for instance on the respective side of the turning wall 13. The pallet extractors 24 and 25 rotate consequently together with the respective rack. The displayed pallet extractors 24 and 25 include in this variant also another gripper 27 for gripping the pallets 5 at the pallet-side oriented towards the openings of the racks 7 respectively 8. The illustrated pallets 5 of figure 2 and figure 3 include therefor a corresponding, form-locking gripper-counterpart 26 (here for instance an U-shaped element, see figure 3). That gripper-counterpart 26 is located outside of the rack openings. By this and due to the form of the gripper-counterparts 26, the racks containing several pallets can be moved vertically, while the associated grippers 24 and 25 can remain in their position without hindering the movement of the respective rack. As the figure illustrates, the pallet extractors 24 and 25 are allocated at the same height h as the machine table 16 in the working area 3 and as the setup station 4. Usually, the racks 7 or 8 are moved vertically while the respective pallet extractor 24 or 25 is in its retracted position (see left pallet extractor 24 in figure 3). In ordinary conditions and for security reasons, the racks 7 and 8 are just turned around the axle 6 while the pallet changer door 19 is closed.

In the embodiment showed in figures 2 and 3, the pallets 5 contain many compartments so that every compartment can contain a raw part to be machined 14 respectively a machined workpiece 15. The use of pallets 5 according to the figures 2 and 3 is particularly indicated for the machining of small parts, like watch-cases, rings etc. Although not shown in the figures, it is also thinkable that the individual compartments of the pallets 5 contain a specifically formed bottom surface, which defines the exact position and orientation of each therein deposited raw part (e.g. a watchcase to be machined). Using pallets with an accordingly formed bottom ensures - to a certain extend - that raw parts deposited in the compartments do not unintentionally shift, e.g. during the manipulation of the pallets 5 by the pallet extractors.

The figures 2 and 3 illustrate also a further embodiment of the invention regarding the manipulation of the pallets respectively the motion concept of the associated machine tool. As indicated by the arrows x and y, in this further embodiment of the invention the machining head 17 has just two degrees of freedom for translational movements, while the translational movement in y direction (see arrow y in figure 2 and figure 3) is effected by the machine table 16. By this, the pallets 5 containing the raw part(s) need just to be moved translationally from the tray of the rack 8 to the machine table 16. Once the pallet is positioned on the machine table 16 - eventually even fixed on the table 16 - all further movements are conducted by the machine table 16 or the machining head 17. As recognizable by the figure 3, the grippers 27 of the pallet extractors 24 or 25 are specifically designed to allow to the pallets 5 the necessary freedom to be moved on the machine table 16 along the y axis.
To further improve the machining ability, the machining head 17 is eventually designed to additionally conduct one or two rotational movements around the x axis and/or the y axis (not shown in the figures).
The explained alternatives of the motion concept facilitate the machining of the raw part(s) 14 contained on a pallet 5. Depending on the type of machining, e.g. machining by electroerosion (EDM) like die-sinking, it might be enough if the machining head 17 and machine table 16 can just conduct translational movements.

In other machining types, e.g. laser machining, it might be beneficial if the machining head 17 is also enabled to conduct rotational movements for a proper alignment of the machining head 17 towards the part 14 to be machined. The ability of the machining head to additionally conduct rotational movements might be particularly indicated in cases where the part remains - as illustrated in the figures 2 and 3 - in the carrying pallet 5 during its machining (e.g. laser ablation or other engraving process of watchcase, dial of a clock, of a ring etc.). The machining head 17 is consequently moved over the raw part 14 to be machined (figure 2).

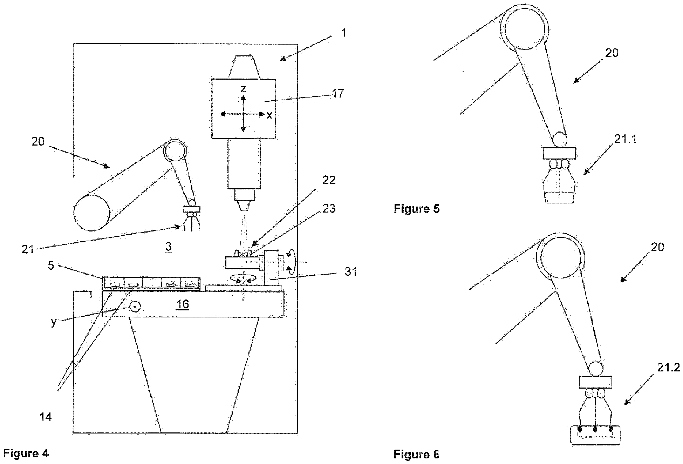

Figure 4 shows a further alternative of the motion concept for the machining of the raw parts. In this embodiment of the invention, the associated machine tool 1 includes a workpiece gripping device 20, which grips single raw parts 14 with its gripping arm 21 and puts them onto a clamping device 22. The clamping device 22 contains clamping jaws 23, which hold the clamped raw part precise in position to allow the raw parts machining by the machining head 17. According to the displayed alternative, the clamping device 22 is mounted on a swivel 31 with offers the possibility to rotate around two axes improving therewith the ability to position the clamped raw part in respect of the machining head 17. The displayed alternative might be particularly indicated for milling, engraving or laser machining applications. At the end of a machining process, the machined workpiece can obviously be placed again in the pallet respectively in the according compartment of the displayed pallet 5. Once all raw parts contained in a pallet 5 are machined, the pallet 5 will be moved back into the pallet changer, meaning into the respective tray of the facing rack by the pallet extractor and replaced with a new pallet filled with new raw parts to be machined. In the displayed embodiment of figure 4 the machine table 16 is able to move along the y axis in accordance to the explanations given to the foregoing figures. Of course it is also thinkable that the translational movement is performed by the machining head 17.

The figures 5 and 6 illustrates two possible alternatives for the gripping arm 21. The gripping arm 21.1 gasps the part externally, while the gripping arm version 21.2 gasps a workpiece (e.g. watch case) internally. The optimal gasp function depends obviously from the form of the workpiece and from the clamping mechanism of the used clamping device.

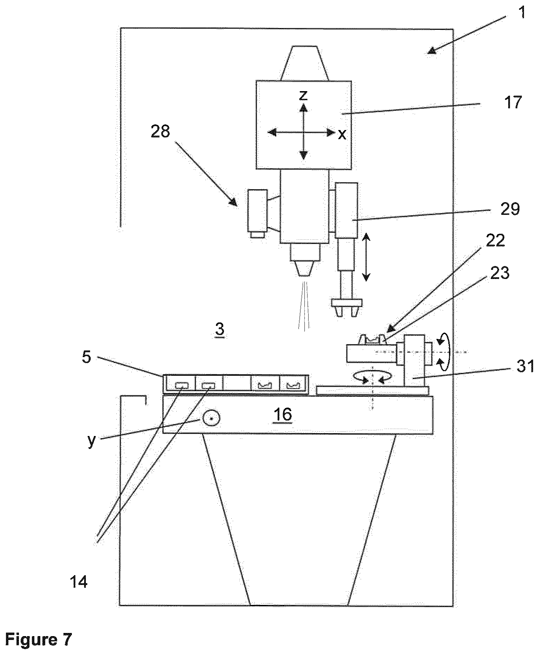

The figure 7 shows a further possible embodiment for the invention. According to this version, the machining head is equipped with a camera 28 which is part of a vision system (not further displayed). The vision system allows identifying the position and orientation of every workpiece precisely. The vision system might also be able to ascertain, if a part has already been machined or not. Such a vision system can obviously cooperate with a suitable designed manipulator for grasping a work-piece. Such a manipulator could be the gripping device 20 of figure 4 or - as figure 7 also illustrates - another version of a gripping device 29 directly mounted on the machining head 17. The displayed gripping device 29 can be for instance equipped with a telescopic functioning arm at which end a gripper is installed. The gripping device 29 can - apart of vertical movements - eventually also be designed to perform movements in x and/or y direction (not shown). The moving arm might for instance work pneumatically - eventually telescopic - and move workpieces from the pallet 5 to the clamping device 22 for the machining of the work-piece.

The invention relates consequently to a pallet changer or to a machine tool with such integrated pallet changer, in which said pallet changer is allocated between the working area of the machine tool and a setup station for the exchange of individual pallets. The invention is defined such that the pallet changer includes a vertical axle, which supports two - around that axle - revolvable, preferably symmetrically arranged, racks. The racks are preferably separated by a wall from each other, wherein each rack comprises at least two trays allocated above each other for containing therein shifteable pallets. The racks are movably supported on the axle, so that they can move along that axle independently from the other rack in a vertical direction. The inventive pallet changer comprises further two pallet extractors. Both pallet extractors are designed for shifting a pallet in and out of the tray located at a predetermined height to a setup station or to the working area of the machine tool. Preferably the predetermined height h for shifting pallets in and out of the trays is for both pallet extractors the same.
In a further embodiment of the invention, the inventive pallet changer comprises just one pallet extractor, which is designed to shift a pallet between the rack and the setup station as between the rack and the working area of the machine tool. Preferably, the pallet extractor includes a gripper for the shifting of the pallets. The gripper might be designed for shifting a pallet just in one first direction towards the machine table of the machine tool. The gripper might have a form-fitting shape, which permits the movement of the pallet in that first direction and allows an independent movement of the pallet in another direction orthogonal to that first direction.
Advantageously, the movement of a pallet located on the machine table in another direction orthogonal to that first direction is conducted by the machine table (16) moveable itself in that direction. Most preferably the movement of a pallet located in the rack in a (vertical) direction z is conducted by vertical movement of the respective rack.
In a preferred embodiment, the form-fitting shapes of the gripper and of the corresponding gripper-counterpart at the pallet are designed to also allow an independent vertical movement of the pallet in direction z once the pallet is located in the retracted position in the tray of the respective rack.
In another embodiment, the machine tool includes a machining head which has at least two translational degrees of freedom (x, y). Preferably those two degrees of freedom are orthogonal to the direction y. Most preferably, also at least two rotational degrees of freedom for the movement of the machining head are foreseen. The inventive device might include a work-piece gripping device for grasping raw parts respectively machined workpieces.
The gripping device can be mounted and moveable with the machining head. Preferably the gripping device includes a tele-scopic functioning moving arm at which end a gripper is installed. Most preferably, the gripping device is able to perform vertical movements, advantageously the gripping device is also able to perform movements in x and/or y direction.
In another embodiment, the gripping device includes a gripping arm for grasping raw parts respectively machined workpieces. Preferably, the gripping arm can grip a part from the parts outside and/or from the parts inside.
The workpiece gripping device can be designed to grasp a raw part from a pallet located in the working area and to position it vis-à-vis of the machining head for that raw parts machining. Preferably, the raw part is positioned and clamped in a clamping device, most preferably the clamping device includes clamping jaws for clamping the raw part respectively workpiece. Advantageously, the clamping device is mounted on a swivel which permits two rotational degrees of freedom for the movement of the clamped part.
According to the invention, the machine tool can include a clamping device for clamping a raw part respectively a work-piece intended to be machined. Advantageously, the clamping device is mounted on a swivel which is designed to rotate a clamped raw part respectively workpiece around two axes. Preferably the clamping device and the swivel are mounted on the machine table of the machine tool. In a further thinkable embodiment, the inventive machine tool includes a vision system equipped with a camera. The vision system is able to measure the position of a part and to signal such a position to a machine control system, to the machining head or to the workpiece gripping device of the machine tool for the manipulation of the identified part. In a further alternative, the vision system is also able to detect the orientation of the identified part. Most preferably the vision system is also able to recognize, if the part has already been machined or not.

According to the invention, the machine table of the machine tool can also include sensor means for detecting the presence of a workpiece or raw part in the department of a pallet. Preferably, the sensor means include an integrated backlight illumination means for the camera of the vision system.
In such a configuration it is also part of the invention to have pallets containing several departments, with each department being made for containing an individual raw part respectively workpiece. Preferably the pallets are equipped for such cases with at least a partially transparent base.

The invention here in matter can also be implemented in pallet changers which are sold separately from the machine tools. That configuration is particularly advantageous for the retrofit of existing machine tools. In such a case the inventive pallet changer includes a vertical axle, which supports two revolvable, preferably symmetrically arranged, racks separated preferably by a wall from each other. Each rack comprises at least two trays allocated above each other for containing therein shifteable pallets. Said racks are movably supported on that axle to move along the axle independently from the other rack in a vertical direction. The pallet changer further comprises two pallet extractors, wherein both pallet extractors are designed for shifting a pallet in and out of the tray located at a predetermined height (h, h1, h2) to a position outside of the pallet changer. Preferably, the predetermined height (h) allowing the shifting of a pallet in and out of the trays is for both pallet extractors the same.
That pallet changer can also comprise just one pallet extractor, which is designed to shift a pallet in and out of the racks to a position outside of the pallet changer.

The present invention is not restricted to the explained embodiment and alternatives.

### References

- 1: machine tool
- 2: pallet changer
- 3: working area
- 4: setup station
- 5: pallet
- 6: vertical rotational axle
- 7: rack, oriented towards the setup station 4
- 8: rack, oriented towards the working area 3
- 9: pallet extractor for moving a pallet between the rack 7 and the setup station 4
- 10: pallet extractor for moving a pallet between the rack 8 and the working area 3
- 11: wall between setup station 4 and pallet changer 2
- 12: wall opening
- 13: wall between revolving racks 7 and 8
- 14: raw part respectively workpiece to be machined
- 15: machined workpiece
- 16: machine table
- 17: machining head
- 18: aperture
- 19: door of the pallet changer
- 20: workpiece gripping device
- 21: gripping arm
- 21.1: gripping arm with external gasp function
- 21.2: gripping arm with internal gasp function
- 22: clamping device
- 23: clamping jaws of the clamping device
- 24, 25: pallet extractor fixedly mounted on the wall 13
- 26: gripper-counterpart
- 27: gripper
- 28: camera of vision system
- 29: gripping device mounted on machining head
- 30: tray of a rack for the containment of a pallet
- 31: swivel

- h1: specific height at which the pallet extractor 9 can move a pallet 5 between the rack 7 and the setup station 4
- h2: specific height at which the pallet extractor 10 can move a pallet 5 between the rack 8 and the working area 3

## Claims

1. Machine tool (1) with integrated pallet changer (2), said pallet changer (2) is allocated between the working area (3) of the machine tool (1) and a setup station (4) for the exchange of individual pallets (5),
the pallet changer (2) includes a vertical axle (6), which supports two revolvable, preferably symmetrically arranged, racks (7,8) separated preferably by a wall (13) from each other, **characterized in that**
each rack (7,8) comprises at least two trays (30) allocated above each other for containing therein shiftable pallets (5), said racks (7,8) being movably supported on the axle (6) to move along the axle (6) independently from the other rack (7,8) in a vertical direction,
the pallet changer (2) further comprising two pallet extractors (9,10, 24, 25), wherein both pallet extractors (9,10, 24, 25) are designed for shifting a pallet (5) in and out of the tray (30) located at a predetermined height (h, h1, h2) to the setup station (4) or to the working area (3) of the machine tool (1), preferably the predetermined height (h) for shifting pallets (5) in and out of the trays (30) is for both pallet extractors (24, 25) the same.

2. Machine tool (1) with integrated pallet changer (2) according to claim 1, **characterized in that** the pallet changer (2) comprises just one pallet extractor, which is designed to shift a pallet between the rack (7) and the setup station (4) as between the rack (8) and the working area (3) of the machine tool (1).

3. Machine tool (1) with integrated pallet changer (2) according to one of the preceding claims, **characterized in that** the pallet extractor (10, 24, 25) includes a gripper (27) for the shifting of the pallets (5), whereat the pallet extractor (24, 25) and its gripper (27) is designed for shifting a pallet (5) in one first direction x to the machine table (16) of the machine tool (1) and wherein the gripper (27) has a form-fitting shape, which permits the movement of the pallet (5) **in that** first direction x and allows an independent movement of the pallet (5) in another direction (y, z) orthogonal to that first direction x,
advantageously the movement of a pallet (5) located on the machine table (16) in a direction y is conducted by the machine table (16) moveable in the direction y, most preferably the movement of a pallet (5) located in the rack (7, 8) in a direction z is conducted by vertical movement of that rack (7, 8).

4. Machine tool (1) with integrated pallet changer (2) according to claim 3, **characterized in that** the form-fitting shapes of the gripper (27) and of the corresponding gripper-counterpart (26) at the pallet (5) are designed to also allow an independent vertical movement of the pallet (5) in direction z once the pallet (5) is in the retracted position in the tray (30) of the rack (7, 8).

5. Machine tool (1) with integrated pallet changer (2) according to one of the preceding claims, **characterized in that** the machine tool (1) includes a machining head (17) which has at least two translational degrees of freedom (x, y), preferably orthogonal to the direction y, and most preferably also at least two rotational degrees of freedom for the movement of the machining head (17).

6. Machine tool (1) with integrated pallet changer (2) according to one of the preceding claims, **characterized in that** the machine tool (1) includes a work-piece gripping device (20, 29) for grasping raw parts (14) respectively machined workpieces (15).

7. Machine tool (1) with integrated pallet changer (2) according to the claim 6, **characterized in that** the gripping device (29) is mounted and moveable with the machining head (17), preferably the gripping device (29) includes a moving arm at which end a gripper is installed, most preferably the gripping device (29) is able to perform vertical movements, advantageously the gripping device (29) is also able to perform movements in x and/or y direction.

8. Machine tool (1) with integrated pallet changer (2) according to the claim 6 or 7, **characterized in that** the gripping device (20, 29) includes a gripping arm (21) for grasping raw parts (14) respectively machined workpieces (15), preferably the gripping arm (21) can grip a part (14, 15) from the parts outside (21.1) and/or from the parts inside (21.2).

9. Machine tool (1) with integrated pallet changer (2) according to one of the claims 6 to 8, **characterized in that** the workpiece gripping device (20, 29) is designed to grasp a raw part (14) from a pallet (5) located in the working area (3) and to position it vis-à-vis of the machining head (17) for the raw parts (14) machining, preferably the raw part (14) is positioned and clamped in a clamping device (22), most preferably the clamping device (22) includes clamping jaws (23) which clamp the raw part (14) respectively the workpiece (15), advantageously the clamping device (22) is mounted on a swivel (31) which allows two rotational degrees of freedom for the movement of the clamped part.

10. Machine tool (1) with integrated pallet changer (2) according to one of the preceding claims, **characterized in that** the machine tool (1) includes a clamping device (22) for clamping a raw part (14) respectively a workpiece (15) to be machined, advantageously the clamping device (22) is mounted on a swivel (31) which allows to rotate a clamped raw part (14) respectively workpiece (15) around two axes, preferably the clamping device (22) and the swivel (31) are mounted on the machine table (16) of the machine tool (1).

11. Machine tool (1) with integrated pallet changer (2) according to one of the preceding claims, **characterized in that** the machine tool (1) includes a vision system equipped with a camera (28), whereas the vision system is able to measure the position of a part (14, 15) and to signal such a position to a machine control system of the machine tool (1), to the machining head (17) or to the workpiece gripping device (20, 29) for the manipulation of the identified part (14, 15), preferably the vision system (28) is also able to detect the orientation of the identified part (14, 15), most preferably the vision system (28) is also able to recognize if the part (14, 15) has already been machined.

12. Machine tool (1) with integrated pallet changer (2) according to one of the proceeding claims, **characterized in that** the machine tool (1), preferably the machine table (16), includes integrated backlight illumination means for the camera of the vision system (28).

13. Pallet changer (2) for machine tools (1)including a vertical axle (6), which supports two revolvable, preferably symmetrically arranged, racks (7,8) separated preferably by a wall (13) from each other, **characterized in that** each rack (7,8) comprises at least two trays (30) allocated above each other for containing therein shifteable pallets (5), said racks (7,8) being movably supported on the axle (6) to move along the axle (6) independently from the other rack (7,8) in a vertical direction,
the pallet changer (2) further comprising two pallet extractors (9,10, 24, 25), wherein both pallet extractors (9,10, 24, 25) are designed for shifting a pallet (5) in and out of the tray (30) located at a predetermined height (h, h1, h2) to a position outside of the pallet changer (2), preferably the predetermined height (h) allowing the shifting of a pallet (5) in and out of the trays (30) is for both pallet extractors (24, 25) the same.

14. Pallet changer (2) for machine tools (1) according to claim 13, **characterized in that** the pallet changer (2) comprises just one pallet extractor, which is designed to shift a pallet in and out of the racks (7, 8) to a position outside of the pallet changer (2),
preferably the pallet extractor (10, 24, 25) includes a gripper (27) for the shif ing of the pallets (5) and whereat the gripper (27) has a form-fitting shape, which permits the movement of the pallet (5) in and out of the racks (7, 8) in one first direction x and allows also an independent movement of the pallet (5) in another direction (y, z) orthogonal to that first direction x,

## Patentansprüche

1. Werkzeugmaschine (1) mit integriertem Palettenwechsler (2), wobei der Palettenwechsler (2) zwischen dem Arbeitsbereich (3) der Werkzeugmaschine (1) und einer Rüststation (4) für den Austausch einzelner Paletten (5) angeordnet ist,
wobei der Palettenwechsler (2) eine vertikale Achse (6) enthält, die zwei drehbare, vorzugsweise symmetrisch angeordnete Gestelle (7, 8) stützt, die vorzugsweise durch eine Wand (13) voneinander getrennt sind, **dadurch gekennzeichnet, dass**
jedes Gestell (7, 8) mindestens zwei Ablagen (30) umfasst, die zur Aufnahme verschiebbarer Paletten (5) darin übereinander angeordnet sind, wobei die Gestelle (7, 8) auf der Achse (6) zur Bewegung entlang der Achse (6) in einer vertikalen Richtung unabhängig von dem anderen Gestell (7, 8) beweglich gestützt werden,
wobei der Palettenwechsler (2) ferner zwei Palettenentnahmevorrichtungen (9, 10, 24, 25) umfasst, wobei beide Palettenentnahmevorrichtungen (9, 10, 24, 25) dazu ausgeführt sind, eine Palette (5) in die und aus der Ablage (30), die sich in einer vorbestimmten Höhe (h, h1, h2) zu der Rüststation (4) oder zum Arbeitsbereich (3) der Werkzeugmaschine (1) befindet, zu verschieben, wobei die vorbestimmte Höhe (h) zum Verschieben der Paletten (5) in die und aus den Ablagen (30) für beide Palettenentnahmevorrichtungen (24, 25) vorzugsweise die gleiche ist.

2. Werkzeugmaschine (1) mit integriertem Palettenwechsler (2) nach Anspruch 1, **dadurch gekennzeichnet, dass** der Palettenwechsler (2) nur eine Palettenentnahmevorrichtung umfasst, die dazu ausgeführt ist, eine Palette zwischen dem Gestell (7) und der Rüststation (4) sowie zwischen dem Gestell (8) und dem Arbeitsbereich (3) der Werkzeugmaschine (1) zu verschieben.

3. Werkzeugmaschine (1) mit integriertem Palettenwechsler (2) nach einem der vorhergehenden Ansprüche, **dadurch gekennzeichnet, dass** die Palettenentnahmevorrichtung (10, 24, 25) einen Greifer (27) für das Verschieben der Paletten (5) enthält, wobei die Palettenentnahmevorrichtung (24, 25) und ihr Greifer (27) dazu ausgeführt sind, eine Palette (5) in eine erste Richtung x zum Maschinentisch (16) der Werkzeugmaschine (1) zu verschieben, und wobei der Greifer (27) eine passgenaue Form aufweist, die die Bewegung der Palette (5) in die erste Richtung x gestattet und eine unabhängige Bewegung der Palette (5) in eine andere Richtung (y, z) orthogonal zu der ersten Richtung x gestattet,
wobei die Bewegung der sich auf dem Maschinentisch (16) befindenden Palette (5) in eine Richtung y vorteilhafterweise durch den in die Richtung y beweglichen Maschinentisch (16) durchgeführt wird, wobei die Bewegung einer im Gestell (7, 8) positionierten Palette (5) in eine Richtung z vorzugsweise durch eine Vertikalbewegung des Gestells (7, 8) durchgeführt wird.

4. Werkzeugmaschine (1) mit integriertem Palettenwechsler (2) nach Anspruch 3, **dadurch gekennzeichnet, dass** die passgenauen Formen des Greifers (27) und des entsprechenden Greifergegenstücks (26) an der Palette (5) dazu ausgeführt sind, auch eine unabhängige Vertikalbewegung der Palette (5) in eine Richtung z zu gestatten, wenn sich die Palette (5) in der zurückgezogenen Position in der Ablage (30) des Gestells (7, 8) befindet.

5. Werkzeugmaschine (1) mit integriertem Palettenwechsler (2) nach einem der vorhergehenden Ansprüche, **dadurch gekennzeichnet, dass** die Werkzeugmaschine (1) einen Bearbeitungskopf (17) enthält, der mindestens zwei translatorische Freiheitsgrade (x, y), vorzugsweise orthogonal zur Richtung y, aufweist und besonders bevorzugt auch mindestens zwei Drehfreiheitsgrade für die Bewegung des Bearbeitungskopfs (17) aufweist.

6. Werkzeugmaschine (1) mit integriertem Palettenwechsler (2) nach einem der vorhergehenden Ansprüche, **dadurch gekennzeichnet, dass** die Werkzeugmaschine (1) eine Werkstückgreifvorrichtung (20, 29) zum Erfassen von Rohteilen (14) bzw. bearbeiteten Werkstücken (15) enthält.

7. Werkzeugmaschine (1) mit integriertem Palettenwechsler (2) nach Anspruch 6, **dadurch gekennzeichnet, dass** die Greifvorrichtung (29) am Bearbeitungskopf (17) montiert und mit diesem beweglich ist, wobei die Greifvorrichtung (29) vorzugsweise einen beweglichen Arm enthält, an dessen Ende ein Greifer installiert ist, wobei die Greifvorrichtung (29) besonders bevorzugt Vertikalbewegungen durchführen kann und die Greifvorrichtung (29) vorteilhafterweise auch Bewegungen in x- und/oder y-Richtung durchführen kann.

8. Werkzeugmaschine (1) mit integriertem Palettenwechsler (2) nach Anspruch 6 oder 7, **dadurch gekennzeichnet, dass** die Greifvorrichtung (20, 29) einen Greifarm (21) zum Erfassen von Rohteilen (14) bzw. bearbeiteten Werkstücken (15) enthält, wobei der der Greifarm (21) vorzugsweise ein Teil (14, 15) von den Teilen von außen (21.1) und/oder von den Teilen von innen (21.2.) ergreifen kann.

9. Werkzeugmaschine (1) mit integriertem Palettenwechsler (2) nach einem der Ansprüche 6 bis 8, **dadurch gekennzeichnet, dass** die Werkstückgreifvorrichtung (20, 29) dazu ausgeführt ist, ein Rohteil (14) von einer sich im Arbeitsbereich (3) befindenden Palette (5) zu erfassen und es gegenüber dem Bearbeitungskopf (17) für die Bearbeitung der Rohteile (14) zu positionieren, wobei das Rohteil (14) vorzugsweise in einer Klemmvorrichtung (22) positioniert und darin eingeklemmt wird, wobei die Klemmvorrichtung (22) besonders bevorzugt Klemmbacken (23) enthält, die das Rohteil (14) bzw. das Werkstück (15) einklemmen, wobei die Klemmvorrichtung (22) vorteilhafterweise an einem Drehteil (31) montiert ist, das zwei Drehfreiheitsgrade für die Bewegung des eingeklemmten Teils gestattet.

10. Werkzeugmaschine (1) mit integriertem Palettenwechsler (2) nach einem der vorhergehenden Ansprüche, **dadurch gekennzeichnet, dass** die Werkzeugmaschine (1) eine Klemmvorrichtung (22) zum Einklemmen eines Rohteils (14) bzw. eines zu bearbeitenden Werkstücks (15) enthält, wobei die Klemmvorrichtung (22) vorteilhafterweise an einem Drehteil (31) montiert ist, das ein Drehen eines eingeklemmten Rohteils (14) bzw. Werkstücks (15) um zwei Achsen gestattet, wobei die Klemmvorrichtung (22) und das Drehteil (31) vorzugsweise auf dem Maschinentisch (16) der Werkzeugmaschine (1) montiert sind.

11. Werkzeugmaschine (1) mit integriertem Palettenwechsler (2) nach einem der vorhergehenden Ansprüche, **dadurch gekennzeichnet, dass** die Werkzeugmaschine (1) ein mit einer Kamera (28) ausgestattetes Sichtsystem enthält, wobei das Sichtsystem die Position eines Teils (14, 15) messen und solch eine Position einem Maschinensteuerungssystem der Werkzeugmaschine (1), dem Bearbeitungskopf (17) oder der Werkstückgreifvorrichtung (20, 29) zur Handhabung des identifizierten Teils (14, 15) melden kann, wobei das Sichtsystem (28) vorzugsweise auch die Ausrichtung des identifizierten Teils (14, 15) detektieren kann, wobei das Sichtsystem (28) weiterhin erkennen kann, ob das Teil (14, 15) bereits bearbeitet worden ist.

12. Werkzeugmaschine (1) mit integriertem Palettenwechsler (2) nach einem der vorhergehenden Ansprüche, **dadurch gekennzeichnet, dass** die Werkzeugmaschine (1), vorzugsweise der Maschinentisch (16), integrierte Hintergrundbeleuchtungsmittel für die Kamera des Sichtsystems (28) enthält.

13. Palettenwechsler (2) für Werkzeugmaschinen (1), der eine vertikale Achse (6) enthält, die zwei drehbare, vorzugsweise symmetrisch angeordnete Gestelle (7, 8) stützt, die vorzugsweise durch eine Wand (13) voneinander getrennt sind, **dadurch gekennzeichnet, dass**
jedes Gestell (7, 8) mindestens zwei Ablagen (30) umfasst, die zur Aufnahme verschiebbarer Paletten (5) darin übereinander angeordnet sind, wobei die Gestelle (7, 8) auf der Achse (6) zur Bewegung entlang der Achse (6) in einer vertikalen Richtung unabhängig von dem anderen Gestell (7, 8) beweglich gestützt werden,
wobei der Palettenwechsler (2) ferner zwei Palettenentnahmevorrichtungen (9, 10, 24, 25) umfasst, wobei beide Palettenentnahmevorrichtungen (9, 10, 24, 25) dazu ausgeführt sind, eine Palette (5) in die und aus der Ablage (30), die sich in einer vorbestimmten Höhe (h, h1, h2) zu einer außerhalb des Palettenwechslers (2) liegenden Stelle befindet, zu verschieben, wobei die vorbestimmte Höhe (h), die das Verschieben der Palette (5) in die und aus den Ablagen (30) gestattet, vorzugsweise für beide Palettenentnahmevorrichtungen (24, 25) die gleiche ist.

14. Palettenwechsler (2) für Werkzeugmaschinen (1) nach Anspruch 13, **dadurch gekennzeichnet, dass** der Palettenwechsler (2) nur eine Palettenentnahmevorrichtung umfasst, die dazu ausgeführt ist, eine Palette in die und aus den Gestelle(n) (7, 8) in eine außerhalb des Palettenwechslers (2) liegende Position zu verschieben,
wobei die Palettenentnahmevorrichtung (10, 24, 25) vorzugsweise einen Greifer (27) für das Verschieben der Paletten (5) enthält und wobei der Greifer (27) eine passgenaue Form aufweist, die die Bewegung der Palette (5) in die und aus den Gestelle (n) (7, 8) in eine erste Richtung x gestattet und eine unabhängige Bewegung der Palette (5) in eine andere Richtung (y, z) orthogonal zu der ersten Richtung x gestattet.

## Revendications

1. Machine-outil (1) comportant un dispositif de changement de palette (2) intégré, ledit dispositif de changement de palette (2) étant placé entre la zone de travail (3) de la machine-outil (1) et un poste de mise en place (4) pour l'échange de palettes (5) individuelles,
le dispositif de changement de palette (2) comprenant un axe vertical (6), qui supporte deux rayonnages (7, 8) tournants, de préférence disposés de manière symétrique, séparés l'un de l'autre de préférence par une paroi (13), **caractérisée en ce que**
chaque rayonnage (7, 8) comprend au moins deux plateaux (30) disposés l'un au-dessus de l'autre, destinés à contenir des palettes (5) déplaçables, lesdits rayonnages (7, 8) étant supportés de manière mobile sur l'axe (6) de telle sorte qu'ils se déplacent le long de l'axe (6) indépendamment de l'autre rayonnage (7, 8) dans une direction verticale,
le dispositif de changement de palette (2) comprenant en outre deux dispositifs d'extraction de palette (9, 10, 24, 25), les deux dispositifs d'extraction de palette (9, 10, 24, 25) étant conçus pour déplacer une palette (5) de façon à l'introduire dans un plateau (30) situé à une hauteur prédéterminée (h, h1, h2) ou à l'extraire de celui-ci pour la transférer au poste de mise en place (4) ou à la zone de travail (3) de la machine-outil (1), la hauteur prédéterminée (h) pour déplacer les palettes (5) de façon à les introduire dans les plateaux (30) ou les extraire de ceux-ci étant, de préférence, identique pour les deux dispositifs d'extraction de palette (24, 25).

2. Machine-outil (1) comportant un dispositif de changement de palette (2) intégré selon la revendication 1, **caractérisée en ce que** le dispositif de changement de palette (2) comprend un seul dispositif d'extraction de palette, qui est conçu pour déplacer une palette entre le rayonnage (7) et le poste de mise en place (4) ainsi qu'entre le rayonnage (8) et la zone de travail (3) de la machine-outil (1).

3. Machine-outil (1) comportant un dispositif de changement de palette (2) intégré selon l'une des revendications précédentes, **caractérisée en ce que** le dispositif d'extraction de palette (10, 24, 25) comprend un élément de préhension (27) servant au déplacement des palettes (5), le dispositif d'extraction de palette (24, 25) et son élément de préhension (27) étant conçus pour déplacer une palette (5) dans une première direction x vis-à-vis de la table de machine (16) de la machine-outil (1) et l'élément de préhension (27) présentant une forme adaptée à un accouplement géométrique, qui permet un déplacement de la palette (5) dans cette première direction x et permet un déplacement indépendant de la palette (5) dans une autre direction (y, z) orthogonale à cette première direction x, le déplacement d'une palette (5) située sur la table de machine (16) dans une direction y étant avantageusement mis en oeuvre par la table de machine (16) mobile dans la direction y, le déplacement d'une palette (5) située dans le rayonnage (7, 8) dans une direction z étant le plus préférablement mis en oeuvre par un déplacement vertical de ce rayonnage (7, 8).

4. Machine-outil (1) comportant un dispositif de changement de palette (2) intégré selon la revendication 3, **caractérisée en ce que** les formes adaptées à un accouplement géométrique de l'élément de préhension (27) et de l'élément conjugué avec l'élément de préhension (26) correspondant au niveau de la palette (5) étant conçues pour permettre également un déplacement vertical indépendant de la palette (5) dans la direction z une fois que la palette (5) se trouve dans la position rétractée dans le plateau (30) du rayonnage (7, 8).

5. Machine-outil (1) comportant un dispositif de changement de palette (2) intégré selon l'une des revendications précédentes, **caractérisée en ce que** la machine-outil (1) comprend une tête d'usinage (17) qui présente au moins deux degrés de liberté en translation (x, y), de préférence orthogonaux à la direction y, et également le plus préférablement au moins deux degrés de liberté en rotation pour le déplacement de la tête d'usinage (17).

6. Machine-outil (1) comportant un dispositif de changement de palette (2) intégré selon l'une des revendications précédentes, **caractérisée en ce que** la machine-outil (1) comprend un dispositif de préhension de pièce à traiter (20, 29) destiné à saisir respectivement des pièces brutes (14) et des pièces (15) usinées.

7. Machine-outil (1) comportant un dispositif de changement de palette (2) intégré selon la revendication 6, **caractérisée en ce que** le dispositif de préhension (29) est installé et mobile en association avec la tête d'usinage (17), de préférence le dispositif de préhension (29) comprend un bras de déplacement au niveau de l'extrémité duquel est installé un élément de préhension, le dispositif de préhension (29) est, le plus préférablement, en mesure d'effectuer des mouvements verticaux, le dispositif de préhension (29) est également, avantageusement, en mesure d'effectuer des mouvements dans la direction x et/ou y.

8. Machine-outil (1) comportant un dispositif de changement de palette (2) intégré selon la revendication 6 ou 7, **caractérisée en ce que** le dispositif de préhension (20, 29) comprend un bras de préhension (21) destiné à saisir respectivement des pièces brutes (14) ou des pièces (15) usinées, de préférence le bras de préhension (21) peut saisir une pièce (14, 15) au niveau de l'extérieur de la pièce (21.1) et/ou au niveau de l'intérieur de la pièce (21.2).

9. Machine-outil (1) comportant un dispositif de changement de palette (2) intégré selon l'une des revendications 6 à 8, **caractérisée en ce que** le dispositif de préhension de pièce (20, 29) est conçu pour saisir une pièce brute (14) à partir d'une palette (5) située dans la zone de travail (3) et pour la placer face à la tête d'usinage (17) pour l'usinage de la pièce brute (14), la pièce brute (14) étant, de préférence, positionnée et fixée par serrage au moyen d'un dispositif de fixation par serrage (22), le dispositif de fixation par serrage (22) comprenant, le plus préférablement, des mâchoires de serrage (23) qui serrent respectivement la pièce brute (14) ou la pièce (15), le dispositif de fixation par serrage (22) étant avantageusement installé sur un pivot (31) qui permet deux degrés de liberté en rotation pour le déplacement de la partie fixée par serrage.

10. Machine-outil (1) comportant un dispositif de changement de palette (2) intégré selon l'une des revendications précédentes, **caractérisée en ce que** la machine-outil (1) comprend un dispositif de fixation par serrage (22) servant à fixer par serrage respectivement une pièce brute (14) ou une pièce (15) à usiner, le dispositif de fixation par serrage (22) étant avantageusement installé sur un pivot (31) qui permet une rotation respectivement d'une pièce brute (14) ou d'une pièce (15) fixée par serrage autour de deux axes, le dispositif de fixation par serrage (22) et le pivot (31) étant, de préférence, installés sur la table de machine (16) de la machine-outil (1).

11. Machine-outil (1) comportant un dispositif de changement de palette (2) intégré selon l'une des revendications précédentes, **caractérisée en ce que** la machine-outil (1) comprend un système de visualisation équipé d'un appareil de prise de vues (28), le système de visualisation ayant la capacité de mesurer la position d'une pièce (14, 15) et d'indiquer une telle position à un système de commande de machine de la machine-outil (1), à la tête d'usinage (17) ou au dispositif de préhension de pièce (20, 29) pour la manipulation de la pièce (14, 15) identifiée, le système de visualisation (28) ayant également, de préférence, la capacité de détecter l'orientation de la pièce (14, 15) identifiée, le système de visualisation (28) ayant également, le plus préférablement, la capacité de déterminer si la pièce (14, 15) a déjà été usinée.

12. Machine-outil (1) comportant un dispositif de changement de palette (2) intégré selon l'une des revendications précédentes, **caractérisée en ce que** la machine-outil (1), de préférence la table de machine (16), comprend des moyens de rétroéclairage intégrés pour l'appareil de prise de vues du système de visualisation (28).

13. Dispositif de changement de palette (2) pour machines-outils (1) comprenant un axe vertical (6), qui supporte deux rayonnages (7, 8) tournants, de préférence disposés de manière symétrique, séparés l'un de l'autre de préférence par une paroi (13), **caractérisé en ce que** chaque rayonnage (7, 8) comprend au moins deux plateaux (30) disposés l'un au-dessus de l'autre, destinés à contenir des palettes (5) déplaçables, lesdits rayonnages (7, 8) étant supportés de manière mobile sur l'axe (6) de telle sorte qu'ils se déplacent le long de l'axe (6) indépendamment de l'autre rayonnage (7, 8) dans une direction verticale,
le dispositif de changement de palette (2) comprenant en outre deux dispositifs d'extraction de palette (9, 10, 24, 25), les deux dispositifs d'extraction de palette (9, 10, 24, 25) étant conçus pour déplacer une palette (5) de façon à l'introduire dans le plateau (30) situé à une hauteur prédéterminée (h, h1, h2) ou à l'extraire de celui-ci pour la transférer à une position située à l'extérieur du dispositif de changement de palette (2), la hauteur prédéterminée (h) permettant le déplacement d'une palette (5) de façon à l'introduire dans les plateaux (30) ou l'extraire de ceux-ci étant, de préférence, identique pour les deux dispositifs d'extraction de palette (24, 25).

14. Dispositif de changement de palette (2) pour machines-outils (1) selon la revendication 13, **caractérisé en ce que** le dispositif de changement de palette (2) comprend un seul dispositif d'extraction de palette, qui est conçu pour déplacer une palette de façon à l'introduire dans les rayonnages (7, 8) ou l'extraire de ceux-ci pour la transférer à une position située à l'extérieur du dispositif de changement de palette (2),
le dispositif d'extraction de palette (10, 24, 25) comprenant, de préférence, un élément de préhension (27) servant au déplacement des palettes (5) et l'élément de préhension (27) présentant une forme adaptée à un accouplement géométrique, qui permet un déplacement de la palette (5) de façon à l'introduire dans les rayonnages (7, 8) ou l'extraire de ceux-ci dans une première direction x et permet également un déplacement indépendant de la palette (5) dans une autre direction (y, z) orthogonale à cette première direction x.
